# EUROPÄISCHE PATENTSCHRIFT

(11) **EP 0 990 811 B1**
(45) Veröffentlichungstag und Bekanntmachung des Hinweises auf die Patenterteilung: **04.06.2003**
(21) Anmeldenummer: 98118717.2
(22) Anmeldetag: 02.10.1998
(51) Int. Cl.: F16D 3/84, F16B 2/08, F16J 3/04

(54) **Vormontierte balgartige Anordnung zum Ummanteln von Gelenkwellen**
Preassembled bellow device for covering articulated shafts
Dispositif de soufflet préassemblé pour couvrir des arbres articulés

(43) Veröffentlichungstag der Anmeldung: 05.04.2000
(73) Patentinhaber: Hans Oetiker AG Maschinen- und Apparatefabrik, 8812 Horgen (CH)
(72) Erfinder: Oetiker, Hans, CH-8812 Horgen (CH)
(74) Vertreter: Troesch Scheidegger Werner AG

(56) Entgegenhaltungen:
- EP-A- 0 545 629
- EP-A- 0 648 949
- EP-A- 0 809 034
- DE-C- 19 620 726
- US-A- 5 150 503

## Beschreibung

Die vorliegende Erfindung betrifft eine Anordnung, vorgesehen zum Ummanteln eines wellenartigen Organes und/oder einer Verbindung zweier Wellen bzw. eines Gelenkes sowie ein Verfahren zum Anordnen einer balgartigen Ummantelung einer Gelenkwelle.

Balgartige Anordnungen für das Ummanteln von wellenartigen Elementen, Verbindungen von Wellen, wie insbesondere Gelenkverbindungen bzw. Gelenkwellen, Getriebewellen und dergleichen, sind bekannt. Speziell in der Automobilindustrie werden Gelenkwellen, Getriebegelenke etc. mittels Gummibälgen ummantelt, um beispielsweise die Gelenke zu schützen und ein Entweichen der Schmierung zu verhindern.

Die Montage der Gummibälge auf die Gelenkwellen erfolgt in der Regel mit bereits je endständig an den Bälgen angeordneten, geschlossenen Schlauchklemmen bzw. Klemm- oder Pressringen, wie beispielsweise die im Markt bestens bekannten sogenannten "Oetiker"-Klemmen, welche zum festen, dichten Verbinden der Bälge mit den jeweiligen Wellenabschnitten mittels geeigneten Werkzeugen bzw. Einrichtungen gespannt oder aufgeschrumpft werden.

Durch dieses vormontierte, bereits geschlossene Anordnen der Klemmen bzw. Klemm- oder Pressringe sind einerseits kostenintensive Massnahmen am Faltenbalg notwendig, dass die nicht geschrumpft oder gespannt lose angeordneten Klemmen bzw. Ringe auf kragenartigen Endabschnitten gehalten werden, und zudem können nach loser Montage der Bälge auf den zu ummantelnden Gelenkwellen allfällig defekte Klemmen oder Ringe nicht mehr ersetzt werden resp. zusätzliche Klemmen oder Ringe bzw. Ersatzklemmen oder Ringe können nicht angeordnet werden.

Wohl wird in der EP 0 545 629 ein bereits auf einem Gummibalg-Ende vormontierter, noch offener Klemmring vorgeschlagen, welcher "selbsttätig" auf einem Montageabschnitt des Gummibalges endständig gehalten wird. Nach Montage des Gummiringes muss aber dieser Klemmring zuerst in einem ersten Montageschritt durch Anlegen eines Werkzeuges gespannt und geschlossen werden, um dann gegebenenfalls in einem zweiten Montageschritt verpresst zu werden. Letzteres insbesondere dann, wenn der Klemm- bzw. Pressring infolge Herstelltoleranzen nicht bereits durch Spannen eine sichere Montage des Balges ermöglicht.

Es ist daher eine Aufgabe der vorliegenden Erfindung, eine Massnahme vorzuschlagen, dass auch bereits lose vormontierte Klemmen bzw. Klemm- oder Pressringe leicht auf einem Balg gehalten werden können und leicht ersetzt werden können resp. zusätzliche Klemmen oder Ringe angeordnet werden können, welche Klemm- oder Pressringe nachfolgend vorzugsweise lediglich mittels eines weiteren Bearbeitungsschrittes eine sichere und feste Montage des Balges ermöglichen.

Erfindungsgemäss wird die gestellte Aufgabe mittels einer Anordnung gemäss dem Wortlaut nach Anspruch 1 gelöst.

Vorgeschlagen wird, dass eine Anordnung, vorgesehen zum Ummanteln eines wellenartigen Organes und/oder eine Verbindung zweier Wellen bzw. einer Gelenkwelle, aufweisend ein balgartiges Element, dieses je endständig einen kragenartigen, weitgehendst ringförmig ausgebildeten Abschnitt aufweist, mit darauf angeordnet einem offenen Klemm-, Press- oder Schrumpfring bzw. einer sogenannten offenen Schlauchklemme, welcher bzw. welche in Richtung zum Zentrum derart vorgespannt ist, dass sich die bei-. den Enden des Ringes bzw. Klemmbandes gegenseitig überlappen und der Ring bzw. die Klemme selbsttätig fest auf dem Abschnitt gehalten wird.

Weitere bevorzugte Ausführungsvarianten der erfindungsgemässen Anordnung sind in den abhängigen Ansprüchen charakterisiert.

Weiter vorgeschlagen wird ein Verfahren zum Anordnen einer balgartigen Ummantelung einer Gelenkwelle bzw. eines Getriebegelenkes, beispielsweise zum Schutz der Schmierung einer Wellenverbindung bzw. eines Gelenkes, wobei die balgartige Ummantelung je endständig an einem kragenartigen Endabschnitt mit einem offenen Klemm-, Press- oder Schrumpfring bzw. einer Schlauchklemme versehen ist, welche zum Zentrum hin vorgespannt ist, dessen bzw. deren Enden zur Bildung einer an- oder ineinandergreifenden Verbindung der Enden mit entsprechenden Konturen versehen sind und welche Enden sich aufgrund der Vorspannung gegenseitig überlappen, dass anschliessend mindestens der eine endständige Kragenabschnitt auf einen an einer Welle bzw. im Bereich des Wellenendes vorgesehenen, weitgehendst kreisrunden Auflageabschnitt übergestülpt bzw. aufgeschoben wird, welcher für das Anordnen und Halten eines der Enden der balgartigen Ummantelung vorgesehen ist, wobei beim Ueberstülpen bzw. Aufschieben und Aufweiten des kragenartigen Endes der balgartigen Ummantelung der Klemm-, Press- oder Schrumpfring bzw. die Schlauchklemme derart aufgeweitet wird, dass die beiden Enden des Ringes bzw. der Klemme soweit in Bandaufweitungsrichtung bewegt werden, dass die an- oder ineinandergreifende feste Verbindung der beiden Bandenden aufgrund der vorgesehenen Konturen entsteht, worauf mittels Press-, Schrumpf- oder Spannvorgang der Ring bzw. die Klemme auf dem kragenartigen Ende in Durchmesser verkleinernder Richtung verfestigt wird zum Herstellen der festen Verbindung zwischen dem balgartigen Element und der Welle.

Wiederum weitere bevorzugte Ausführungsvarianten des erfindungsgemässen Verfahrens sind in abhängigen Ansprüchen charakterisiert.

Die erfindungsgemäss definierte Anordnung bzw. das Verfahren ist selbstverständlich geeignet für die Ummantelung von Wellen bzw. wellenartigen Elementen von unterschiedlicher Art, für das Ummanteln bzw. Schützen von gelenkartigen Verbindungen, Gelenkwellen, Getriebewellen usw. Auch können für die erfindungsgemässen Anordnungen bzw. Verfahren die verschiedensten balgartigen Elemente aus den unterschiedlichsten, elastischen Materialien, wie Gummi, Elastomere, thermoplastische Kunststoffe, etc. verwendet werden, wie auch die unterschiedlichsten Schlauchklemmen, Press- oder Schrumpfringe, wobei die, die beiden Bandenden der Klemmen bzw. der Ringe verbindenden Enden auf unterschiedlichste Art und Weise ausgebildet sein können. Wesentlich ist, dass die beiden Enden eine Kontur aufweisen, die beim Aufweiten der Klemme bzw. des Bandes eine in- oder aneinandergreifende Verbindung bzw. ein Ineinandergleiten oder Einschnappen ermöglicht. In diesem Zusammenhang sei verwiesen, beispielsweise auf Klemmen beschrieben in der EP 570 742, der EP 591 648, der EP 503 609, der CH 561 383, der CH 555 026, der CH 669 642, der CH 677 010, der CH 679 945, der EP 543 338 sowie auf sogenannte "Oetiker"-Klemmen, wie sie im Markt weit verbreitet und bestens bekannt sind, um nur einige zu nennen.

Der grosse Vorteil des erfindungsgemäss vorgeschlagenen Verfahrens liegt darin, dass der erfindungsgemäss gewählte vorgespannte Schrumpf- bzw. Press- oder Spannring kleiner und genauer ausgebildet werden kann und damit in seiner Fertigung billiger ist. Zudem ergibt sich ein kleinerer Schrumpfweg, als sich dies beispielsweise bei einem bereits angeordneten geschlossenen Ring ergibt.

Ein weiterer Vorteil ergibt sich dadurch, dass der erfindungsgemässe Ring von der Seite her einführbar und genau dort positionierbar ist, wo er schlussendlich anzuordnen ist. Damit kann aber auch an einem bestimmten Ort ein Schrumpf- oder Pressring angeordnet werden, welcher mit entsprechenden Produktions- bzw. Montagedaten versehen ist, welche genau an diesem Ort zu plazieren sind. Somit können später diese gegebenenfalls wichtigen Angaben auf dem erfindungsgemäss plazierten Schrumpf- bzw.

Pressring eingesehen werden, welche Angaben beispielsweise auf dem Pressring eingestanzt werden können.

Die Erfindung wird nun anschliessend beispielsweise und unter Bezug auf die beigefügten Figuren näher erläutert.

Dabei zeigen:
- Fig. 1: in Perspektive, in Richtung gegen eine Oeffnung gesehen, einen Faltenbalg, aufweisend an einem Ende einen offenen Spann- bzw. Pressring wie erfindungsgemäss vorgeschlagen,
- Fig. 2: einen Ausschnitt aus Fig. 1, darstellend die sich überlappenden Bandenden des Schrumpf- bzw. Pressringes aus Fig. 1,
- Fig. 3 und 4: mögliche Ausgestaltungen von Press- bzw. Spannringen, bekannt aus dem Stand der Technik für das vormontierte Anordnen der Press- bzw. Spannringe,
- Fig. 5: den Spann- bzw. Pressring aus Fig. 1 im nichtmontierten Zustand,
- Fig. 6: den Faltenbalg aus Fig. 1 im auf einem Wellenende angeordneten Zustand vor dem Verpressen des Press- bzw. Spannringes,
- Fig. 6a: eine Halbachse respektive eine Gelenkwelle mittels Faltenbälgen, entsprechend demjenigen aus Fig. 6,
- Fig. 7: eine mögliche Ausgestaltung der beiden Bandenden des Press- bzw. Spannringes,
- Fig. 8: eine weitere Ausführungsvariante der Verbindung von Press- bzw. Spannring, und
- Fig. 9: im Sinne eines Beispiels eine Einrichtung, zum Schrumpfen bzw. Spannen des Spann- bzw. Pressringes auf dem Faltenbalg.

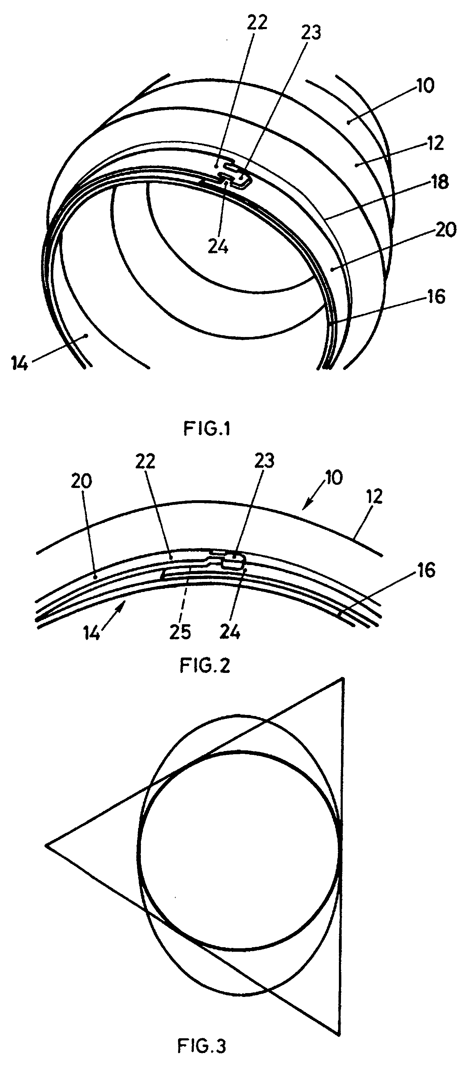

Fig. 1 zeigt, in Perspektive in Richtung gegen das grössere Balgende hin gesehen, eine erfindungsgemässe Anordnung, aufweisend einen Faltenbalg 10 mit den einzelnen Balgabschnitten 12. Der Faltenbalg 10 kann beispielsweise aus einem Gummi bzw. einer Gummimischung bestehen oder aus einem anderen geeigneten Elastomermaterial, wie beispielsweise einem geeigneten thermoplastischen Kunststoff. Auf dem in Fig. 1 sichtbaren grösseren, kragenartigen Ende 14 ist ein Klemm- bzw. Press- oder Schrumpfring 20 angeordnet. Die beiden Enden 22 und 24 sind lose, sich gegenseitig überlappend angeordnet, d.h. mit anderen Worten der Schrumpfring 20 ist lose und kann jederzeit durch Auseinanderziehen der beiden Enden vom Kragen 14 des Balges 10 entfernt werden. Damit der Schrumpfring 20 selbsttätig fest auf dem endständigen Kragen 14 des Balges 10 gehalten wird, ist er einerseits, wie bereits erwähnt, in Ringmitte-Richtung hin vorgespannt ausgebildet, und zudem weist der Kragen 14 vorzugsweise einen endständigen Rand 16 auf, sowie eine weitere, gegen den ersten Balgabschnitt hin ausgebildete, zweite randartige Abstufung 18. Der Rand 16 sowie die Abstufung 18 sind vorzugsweise derart voneinander beabstandet ausgebildet, dass der Ring mit seiner Breite dazwischenliegend festgelegt werden kann. Insbesondere in Fig. 2, in welcher Figur die beiden Bandenden 22 und 24 aus Fig. 1 in Vergrösserung dargestellt sind, ist gut erkennbar, dass das eine Bandende 22 eine vorstehende Zunge 23 bzw. Lasche aufweist, mit seitlich, d.h. quer zur Bandrichtung, vorstehenden Abschnitten. Im anderen Bandende 24 ist, nicht sichtbar, eine entsprechende Aussparung bzw. Auskerbung 25 vorgesehen, damit beim Aufweiten des Ringbandes 20 die Lasche 23 in die entsprechende Aussparung 25 verlustlos einschnappen kann. Wie in Fig. 2 weiter gut erkennbar, ist dasjenige Bandende nach aussen gerichtet angeordnet, welches die Lasche bzw. die Zunge 23 aufweist.

Im Stand der Technik wurde bereits versucht, wenigstens einen Teil der dieser Erfindung zugrundeliegenden Aufgabe zu lösen, d.h. einen noch nicht geschrumpften Press- bzw. Klemm- oder Schrumpfring auf dem kragenartigen Ende eines Faltenbalges zu halten. Ein möglicher Lösungsansatz ist in Fig. 3 dargestellt, indem beispielsweise das Band oval bzw. ellipsenförmig ausgebildet ist, um eine Klemmwirkung gegen die Kragenoberfläche hin zu erzielen. Gemäss einer weiteren Darstellung aus Fig. 3 ist das Band dreieckförmig angeordnet, um wenigstens an drei Auflageabschnitten eine Klemmwirkung gegen den Kragen zu erzielen.

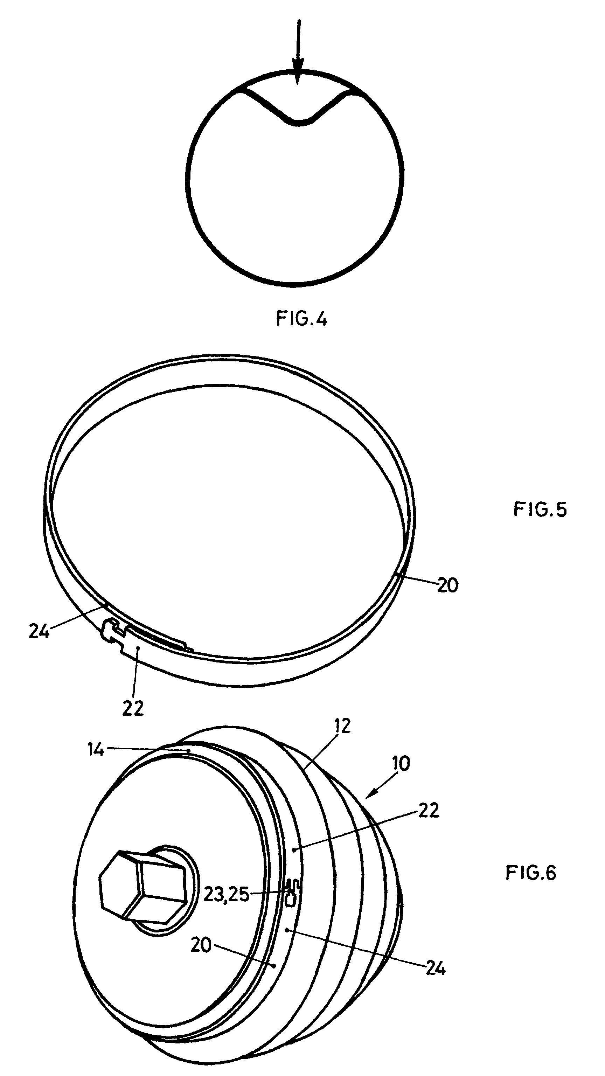

In Fig. 4 ist wiederum ein weiterer Lösungsansatz dargestellt, indem es auch denkbar ist, dass bei der Vormontage des bereits geschlossenen Klemm- oder Schrumpfringes der Balg durch eine nach innen weisende Umformung desselben im Durchmesser verkleinert wird, damit der bereits geschlossene Ring aufgezogen werden kann. Diese Methode ist im Zusammenhang mit gummiähnlichen Materialien für Faltenbälge wohl möglich, jedoch kaum im Zusammenhang mit den heute mehrheitlich verwendeten thermoplastischen Materialien bzw. Elastomeren, wie beispielsweise Hytrel, Anitel, usw.

Zudem gehen die Lösungsansätze, dargestellt in den Fig. 3 und 4, immer von bereits geschlossenen Klemm- bzw. Schrumpfringen aus, was gelegentlich nicht vorteilhaft ist.

Aus diesem Grunde wird vorgeschlagen, dass der in Fig. 5 dargestellte Schrumpf- bzw. Pressring 20 verwendet wird, welcher zum Zentrum hin vorgespannt ausgebildet ist, und dass sich im losen Zustand die beiden Bandenden 22 und 24 überlappen. Damit entsteht eine Spann- bzw. Klemmwirkung, welche den Press- bzw. Schrumpfring 20 selbsttätig auf dem kragenartigen Ende 14, wie in Fig. 1 dargestellt, hält.

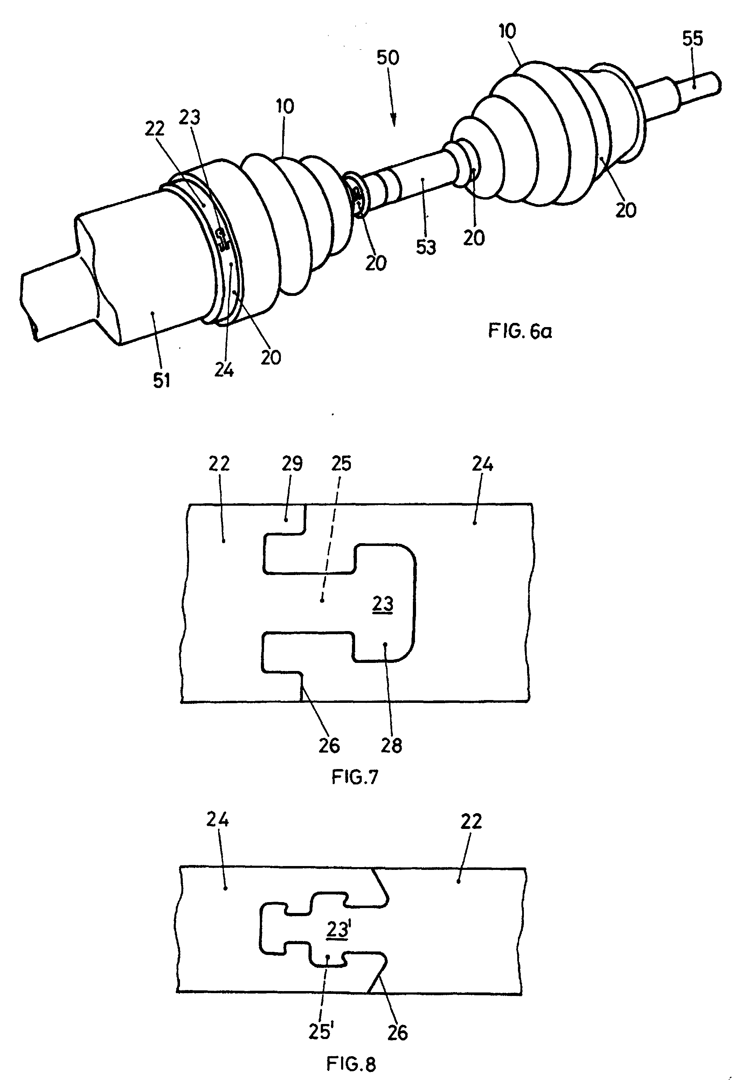

Bei der Montage des Faltenbalges 10 mit vormontiertem Schrumpf-bzw. Pressring 20, wie beispielsweise einem sogenannten Multi Crimp Ring (MCR) auf das metallische Gegenstück bzw. Ende einer Welle, wird das kragenartige Ende 14 des Balges aufgeweitet. Der im Anlieferungszustand mit den beiden offenen Bandenden sich überlappende MCR wird durch diesen Aufweitungsvorgang ebenfalls gedehnt, und die beiden Enden schnappen selbsttätig auf der gleichen Bandebene ein, wie in Fig. 6 gut erkennbar. Die Lasche bzw. Zunge 23 schnappt in die entsprechende Aussparung 25 im Bandende 24 ein, und aufgrund der Ausgestaltung der Zunge bzw. der Lasche 23 mit den quer in Bandrichtung seitlich vorstehenden Abschnitten verriegeln sich die beiden Enden.

In Fig. 6a ist eine Halbachse 50 dargestellt, aufweisend zwei Gelenke, angeordnet einerseits zwischen einer Antriebswelle 51 und einer Verbindungswelle bzw. Lenkwelle 53, sowie andererseits zwischen der Verbindungs- bzw. Lenkwelle 53 und der Radwelle bzw. Radnabe 55. Die beiden Gelenke sind je mittels einem Balg 10 ummantelt, welcher je die Gelenke schützt bzw. deren Schmierung "sicherstellt". Die beiden Bälge 10 sind wiederum mit erfindungsgemäss vorgeschlagenen Schrumpf- bzw. Pressringen 20 gesichert, wobei am Schrumpfring nahe der Antriebswelle 51 die beiden Bandenden 22 und 24 sowie die in einer entsprechenden Aussparung eingreifende Zunge 23 deutlich erkennbar sind. Der grosse Vorteil der vorliegenden Erfindung wird erneut anhand einer derartigen Halbachse bzw. Gelenkwelle 50 deutlich, indem diese mit "losen" Schrumpf- bzw. Pressringen angeliefert werden kann, wobei jedoch nicht die Gefahr besteht, dass diese Press- oder Schrumpfringe abfallen können. Auch besteht jederzeit die Möglichkeit, einen der bereits montierten Schrumpf- bzw. Pressringe zu entfernen, selbst wenn die Halbachse bereits definitiv montiert ist, da ja ein neuer noch offener Schrumpf- bzw. Pressring seitlich auf den zu verpressenden Kragen aufgeschoben werden kann.

In den Fig. 7 und 8 sind beispielsweise mögliche Ausführungsvarianten von Bandenden dargestellt, wobei in Fig. 7 die von dem einen Ende 22 bzw. der Kante 26 vorstehende Lasche die erwähnten quer zur Bandrichtung vorstehenden Abschnitte 28 aufweist. Weiter weist das Ende des Bandabschnittes 22 seitlich zur Lasche 23 vorstehende Abschnitte 29 auf, um ein seitliches Ausbrechen der von den beiden Abschnitten 28 hintergriffenen Bereichen im Ende 24 zu verhindern. Vorzugsweise sind Lasche und entsprechende Aussparung derart ausgebildet, dass ein verlustloses Ineinandergreifen gewährleistet ist.

In Fig. 8 ist eine weitere Ausführungsvariante einer Verbindung dargestellt, wobei die wiederum mittig im Bandende 22 angeordnete Lasche bzw. Zunge 23' in einer entsprechenden Aussparung 25' eingreifend angeordnet ist. In dieser Ausführungsvariante sind mehrere quer zur Bandrichtung seitlich vorstehende Abschnitte vorgesehen, welche zudem spezielle Konturen aufweisen.

Die beiden Bandverbindungen bzw. Bandverschlüsse, dargestellt in den Fig. 7 und 8, sind selbstverständlich nur Beispiele und dienen lediglich für das bessere Verständnis der vorliegenden Erfindung. Durch diese Erfindung miterfasst sind selbstverständlich x-beliebige andere Bandverschlüsse bzw. Verbindungen, welche ein selbsttätiges An- bzw. Ineinandergreifen bzw. Einschnappen der Enden beim Aufweitungsvorgang des Bandes ermöglichen.

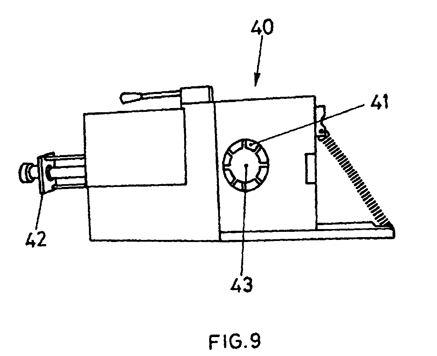

Nach erfolgter Montage des Balges auf einem Wellenende, wie dargestellt in den Figuren 6 und 6a, muss nun lediglich der Press- bzw. Schrumpfring bzw. der vormontierte MCR gespannt bzw. verpresst werden. Wieder im Sinne eines Beispieles ist in Fig. 9 eine derartige Einrichtung dargestellt, welche zum Schrumpfen von vormontierten MCR geeignet ist. Bei diesem Vorgang wird der im vormontierten Zustand eingehängte Verschluss des Schrumpf- bzw. Pressringes derart verdichtet, dass er sich nicht mehr selbsttätig öffnen bzw. trennen kann. Die in Fig. 9 dargestellte Einrichtung 40 weist, vereinfacht beschrieben, ringförmig nach innen betätigbare Klemmsegmente 41 auf, welche insgesamt mit ihren inneren Konturen eine ringförmige Oeffnung 43 aufweisen. Durch eine hydraulische oder pneumatische Einrichtung 42 können die einzelnen Klemmsegmente 41 radial nach innen gepresst bzw. getrieben werden, um den Schrumpf- bzw. Pressring in seinem Durchmesser zu verkleinern bzw. um diesen zu schrumpfen.

Die vorliegende Neuentwicklung beinhaltet somit Klemm- bzw. Schrumpfringe bzw. sogenannte Multi Crimp-Ringe (MCR) mit offenen Enden und bekanntem mechanischem Verschluss. Durch den Umstand, dass diese MCR mit offenen Enden hergestellt werden, können diese mit entsprechender Vorspannung gefertigt werden.

Diese Vorspannung bewirkt eine Federwirkung Richtung Ringzentrum. Diese Federwirkung kann dazu benutzt werden, dass sich der Ring ohne konstruktive Anpassung am Faltenbalg im Bereich der Endauskragung in entsprechend vorgesehener Nute, beispielsweise vorgesehen für die Aufnahme von MCR, selbsttätig festhält, da bekanntlich praktisch jeder Faltenbalgtyp mit der genannten Nute hergestellt wird. Diese Nute kann durchgehend oder auch nur als einzelner Nocken, angeordnet am Balgumfang, ausgebildet sein. Somit ist eine Vormontage möglich, und zwar ohne jegliche konstruktive Aenderung am Faltenbalg, d.h. jeder serienmässig hergestellte Faltenbalg kann mit dem integrierten MCR, versehen als System, ausgerüstet werden, was bei der Endmontage einen Arbeitsgang einspart.

Bei den in den Fig. 1 - 9 dargestellten Ausführungsvarianten bzw. Einrichtungen im Zusammenhang mit dem Anordnen von Faltenbälgen handelt es sich selbstverständlich nur um Beispiele, welche die erfinderische Idee bzw. den erwähnten Montagevorgang näher erläutern sollen. Sowohl die Ausgestaltung des Faltenbalges, wie insbesondere das für den Faltenbalg verwendete Material, wie auch die Ausgestaltung des Klemm- bzw. Schrumpfringes bzw. des sogenannten MCR und wiederum das dafür verwendete Material sind selbstverständlich in x-beliebiger Art und Weise variierbar, und die Erfindung ist nicht auf irgendeine Ausführungsvariante beschränkt. Wohl hat es sich gezeigt, dass beispielsweise für die Herstellung der MCR Aluminium geeignet ist, doch können selbstverständlich auch rostfreier Stahl oder irgendwelche andere, geeignete metallische Materialien dafür verwendet werden.

## Patentansprüche

1. Anordnung, vorgesehen zum ummanteln des wellenartigen Organes und/oder einer gelenkartigen Verbindung zweier Wellen bzw. eines Lenkgetriebes, aufweisend ein balgartiges Element, wobei das balgartige Element (10) je endständig einen kragenartigen, weitgehendst ringförmig ausgebildeten Abschnitt (14) aufweist, mit darauf angeordnet einem offenen Klemm-, Press- oder Schrumpfring (20) bzw. einer sogenannten offenen Schlauchklemme, welcher bzw. welche in Richtung Zentrum derart vorgespannt ist, dass sich die beiden. Enden (22, 24) gegenseitig überlappen und der Ring bzw. die Klemme selbsttätig fest auf dem Abschnitt gehalten wird, darduch gekennzeichnet dass in den beiden Bandenden der Klemme bzw. des Ringes in- oder aneinandergreifende Abschnitte (23, 25) vorgesehen sind, um beim Aufweiten des Ringes bzw. der Klemme das Ring- bzw. Klemmband schliessend selbsttätig, an- bzw. ineinandergreifend einzuschnappen.

2. Anordnung nach Anspruch 1, **dadurch gekennzeichnet, dass** am kragenartigen Abschnitt (14) mindestens ein Rückhalteabschnitt (16) vorgesehen ist, um das Ringband bzw. Klemmband im offenen, nichtmontierten Zustand auf den Abschnitt zu halten.

3. Anordnung nach Anspruch 2, **dadurch gekennzeichnet, dass** der Rückhalteabschnitt ein endständiger Rand ist, bzw. dass auf dem endständigen Kragen ein nutartiger Abschnitt ausgebildet ist, um darin das Klemm- bzw. Ringband im vormontierten Zustand zu halten.

4. Anordnung nach einem der Ansprüche 1 bis 3, **dadurch gekennzeichnet, dass** das eine Ende des Ring- bzw. Klemmbandes mindestens eine in Bandrichtung vorstehende Zunge bzw. Lasche (23) aufweist, mit quer dazu vorstehenden Abschnitten (28) sowie das andere Ende des Ring- bzw. Klemmbandes mindestens eine Auskerbung bzw. Ausstanzung (25), welche wenigstens nahezu der Kontur der Lasche bzw. Zunge entspricht, um diese bei der Montage des Balges und der Aufweitung des Ringes bzw. der Klemme das Ring- bzw. Klemmband vorzugsweise verlustlos verschliessend aufzunehmen.

5. Anordnung nach Anspruch 4, **dadurch gekennzeichnet, dass** das die Zunge bzw. Lasche aufweisende Ring- bzw. Bandende (22) bei lose vormontierter, offener Klemme bzw. bei offenem Ring nach aussen gerichtet auf dem anderen, die Auskerbung aufweisenden inneren Bandende (24) aufliegt.

6. Anordnung nach einem der Ansprüche 1 bis 5, **dadurch gekennzeichnet, dass** das kragenartige Ende des Balges an seiner Innenseite aufgerauht ausgebildet ist und/oder Rippen oder Nuten aufweist, um auf dem Wellenabschnitt, gegebenenfalls in entsprechend ausgebildeten Nuten eingreifend, aufzuliegen.

7. Anordnung nach einem der Ansprüche 1 bis 6, **dadurch gekennzeichnet, dass** der Klemm- bzw. Schrumpfring bzw. das Klemmband ein sogenannter Multi Crimp-Ring ist.

8. Verfahren zum Anordnen einer balgartigen Ummantelung einer Gelenkwelle bzw. eines Getriebegelenkes, beispielsweise zum Schütze der Schmierung einer Wellenverbindung bzw. eines Gelenkes, wobei die balgartige Ummantelung (10) je endständig an einem kragenartigen Endabschnitt (14) mit einem offenen Klemm-, Press- oder Schrumpfring bzw. einer Schlauchklemme (20) versehen wird, **dadurch gekennzeichnet, dass** dessen (22,24) Enden zur Bildung einer an- oder ineinandergreifenden Verbindung der Bandenden mit entsprechenden Konturen (23,25) versehen sind und welche Bandenden sich gegenseitig überlappen, dass anschliessend mindestens der eine endständige Kragenabschnitt auf einem an der Welle (51) bzw. im Bereich des Wellenendes vorgesehenen, weitgehendst kreisrunden Auflageabschnitt aufgeschoben bzw. übergestülpt wird, welcher für das Anordnen und Halten eines der Enden der balgartigen Ummantelung (10) vorgesehen ist, wobei beim Aufschieben bzw. Ueberstülpen und Aufweiten des kragenartigen Endes (14) der balgartigen Ummantelung der Klemm-, Press-oder Schrumpfring bzw. die Schlauchklemme (20) derart aufgeweitet wird, dass die beiden Bandenden (22,24) des Ringes soweit in bandaufweitender Richtung bewegt werden, dass die an- bzw. ineinandergreifende feste Verbindung bzw. der Verschluss zwischen den beiden Bandenden entsteht, worauf mittels Press- oder schrumpfvorgang der Ring bzw. die Klemme auf dem kragenartigen Ende in Durchmesser verkleinernder Richtung verfestigt wird zur Herstellung der festen Verbindung zwischen Balg und Welle bzw. Wellenende.

9. Verfahren nach Anspruch 8, **dadurch gekennzeichnet, dass** der Press- bzw. Klemm- oder Schrumpfring bzw. die Schlauchklemme derart in Richtung Zentrum vorgespannt ist, dass sich die beiden Enden in lose vormontiertem Zustand gegenseitig überlappen.

10. Gelenkwelle bzw. Halbachse, insbesondere für die Verwendung in Motorfahrzeugen, mit mindestens einer Anordnung nach einem der Ansprüche 1 bis 7.

## Claims

1. Arrangement, provided for covering the shaft-like member and/or an articulation-like connection of two shafts or of a steering gear, having a bellows-like element, the bellows-like element (10) having at each end a collar-like, substantially ring-shaped portion (14), on which there is arranged an open clamping, press or shrink ring (20) or a so-called open hose clamp, which ring or clamp is prestressed towards the centre in such a way that the two ends (22, 24) mutually overlap and the ring or clamp is automatically held firmly on the portion, **characterised in that** interlocking portions (23, 25) are provided in the two band ends of the clamp or ring, in order, upon expansion of the ring or clamp, to snap the ring band or clamping band into place in a closing, automatically interlocking manner.

2. Arrangement according to Claim 1, **characterised in that** at least one retaining portion (16) is provided on the collar-like portion (14), in order to hold the ring band or clamping band on the portion in the open, unmounted state.

3. Arrangement according to Claim 2, **characterised in that** the retaining portion is an end edge, or **in that** a groove-like portion is formed on the end collar, in order to hold the clamping or ring band therein in the preassembled state.

4. Arrangement according to one of Claims 1 to 3, **characterised in that** one end of the ring band or clamping band has at least one tongue or shackle (23) projecting in the band direction, with portions (28) projecting transversely thereto, and the other end of the ring band or clamping band has at least one notch or cutout (25) which corresponds at least approximately to the contour of the shackle or tongue, in order, upon mounting the bellows and expansion of the ring or clamp, to receive the shackle or tongue in such a way as to close the ring band or clamping band preferably in a loss-free manner.

5. Arrangement according to Claim 4, **characterised in that** the ring end or band end (22) having the tongue or shackle rests outwardly on the other, inner band end (24) having the notch when the clamp is loosely preassembled and open or the ring is open.

6. Arrangement according to one of Claims 1 to 5, **characterised in that** the collar-like end of the bellows is of roughened form on its inner side and/or has ribs or grooves, in order to rest on the shaft portion, optionally engaging in correspondingly formed grooves.

7. Arrangement according to one of Claims 1 to 6, **characterised in that** the clamping or shrink ring or the clamping band is a so-called multi-crimp ring.

8. Method for arranging a bellows-like covering of an articulated shaft or of a gear articulation, for example for protecting the lubrication of a shaft connection or of an articulation, the bellows-like covering (10) being provided at each end, on a collar-like end portion (14), with an open clamping, press or shrink ring or a hose clamp (20), **characterised in that** the ends (22, 24) of the ring are provided with corresponding contours (23, 25) in order to form an interlocking connection of the band ends and which band ends mutually overlap, **in that** at least one end collar portion is subsequently slipped on or put over a substantially circular supporting portion provided on the shaft (51) or in the region of the shaft end, which supporting portion is provided for arranging and holding one of the ends of the bellows-like covering (10), the clamping, press or shrink ring or the hose clamp (20) being expanded, when slipping on or putting over the collar-like end (14) and upon expansion thereof, in such a way that the two band ends (22, 24) of the ring are moved to such an extent in the band-expanding direction that the interlocking firm connection or the closure between the two band ends results, whereupon the ring or clamp is secured in the diameter-reducing direction on the collar-like end by means of a pressing or shrinking operation, in order to produce the firm connection between bellows and shaft or shaft end.

9. Method according to Claim 8, **characterised in that** the press or clamping or shrink ring or the hose clamp is prestressed towards the centre in such a way that the two ends mutually overlap in the loosely preassembled state.

10. Articulated shaft or half axle, in particular for use in motor vehicles, having at least one arrangement according to Claims 1 to 7.

## Revendications

1. Dispositif prévu pour envelopper l'organe en forme d'arbre et/ou une liaison articulée de deux arbres, respectivement d'une direction, présentant un élément en forme de soufflet, dans lequel l'élément en forme de soufflet (10) présente à chaque extrémité un tronçon (14) formé largement comme un anneau en forme de col, avec disposée sur celui-ci une bague (20) ouverte de serrage, de compression ou de contraction, respectivement un soi-disant collier de serrage ouvert, qui est précontraint en direction du centre de telle sorte que les deux extrémités (22, 24) se chevauchent l'une l'autre et la bague, respectivement le collier se maintiennent fixement eux-mêmes sur le tronçon, **caractérisé en ce que** dans les deux extrémités du ruban du collier, respectivement de la bague, des tronçons (23, 25) s'accrochant l'un dans l'autre ou l'un contre l'autre sont prévus pour que, lors de l'évasement de la bague, respectivement du collier, le ruban de la bague, respectivement du collier s'engagent automatiquement l'un dans l'autre et/ou l'un contre l'autre en s'accrochant.

2. Dispositif selon la revendication 1, **caractérisé en ce que** sur le tronçon en forme de col (14) est prévu au moins un tronçon de retenue (16) pour maintenir en l'état ouvert non monté sur le tronçon le ruban de la bague, respectivement le ruban du collier.

3. Dispositif selon la revendication 2, **caractérisé en ce que** le tronçon de retenue est un bord en extrémité, respectivement **en ce que** sur le col en extrémité un tronçon en rainure est formé afin d'y maintenir le ruban du collier, respectivement de la bague en l'état précédant le montage.

4. Dispositif selon l'une des revendications 1 à 3, **caractérisé en ce que** l'une des extrémités du ruban de la bague, respectivement du collier, présente au moins une languette, respectivement une patte (23) qui dépassent dans la direction du ruban, avec des tronçons (28) perpendiculaires à celle-ci qui dépassent, et également l'autre extrémité du ruban de la bague, respectivement du collier comporte au moins une encoche, respectivement une partie découpée (25) qui correspond au moins quasiment au contour de la patte, respectivement de la languette pour que le ruban de la bague, respectivement du collier, reçoive celle-ci en se fermant de préférence sans vide lors du montage du soufflet et de l'évasement de la bague, respectivement du collier.

5. Dispositif selon la revendication 4, **caractérisé en ce que** lorsque le collier est ouvert et en l'état détaché précédant le montage, lorsque la bague, respectivement le collier est ouvert(e), l'extrémité du ruban (22) de la bague, respectivement du collier, présentant la languette, respectivement la patte, repose orientée vers l'extérieur sur l'autre extrémité du ruban (24) intérieur présentant l'encoche.

6. Dispositif selon l'une quelconque des revendications 1 à 5, **caractérisé en ce que** l'extrémité en forme de col du soufflet est formée de façon rugueuse sur sa face intérieure et/ou présente des arêtes ou des rainures pour s'appuyer sur la section de l'arbre, éventuellement en s'engrenant dans des rainures formées de façon correspondante.

7. Dispositif selon l'une quelconque des revendications 1 à 6, **caractérisé en ce que** la bague de serrage, respectivement de contraction, respectivement le ruban de serrage est une soi-disant bague de sertissage multiple.

8. Procédé pour disposer une enveloppe en forme de soufflet d'un arbre articulé, respectivement d'une direction, par exemple pour la protection de la lubrification d'une liaison d'arbres, respectivement d'une articulation, dans lequel l'enveloppe (10) en forme de soufflet est munie à chaque extrémité sur un tronçon terminal (14) en forme de col d'une bague ouverte de serrage, de compression ou de contraction, respectivement d'un collier de serrage (20), **caractérisé en ce que** ses extrémités (22, 24) sont munies de contours (23, 25) correspondants pour former une liaison des extrémités du ruban s'accrochant l'une dans l'autre ou l'une contre l'autre, et lesquelles extrémités de ruban se chevauchent l'une l'autre, **en ce qu'**ensuite au moins l'un des tronçons terminaux en forme de col prévu sur l'arbre (51), respectivement sur une zone d'extrémité de l'arbre est engagé dans, respectivement placé sur un tronçon d'appui largement en forme de cercle, qui est prévu pour la disposition et le maintien d'une des extrémités de l'enveloppe (10) en forme de soufflet, procédé dans lequel, lors de l'engagement, respectivement de la mise en place de l'évasement de l'extrémité en forme de col (14) de l'enveloppe en forme de soufflet, la bague (20) de serrage, de compression ou de contraction, respectivement le collier de serrage (20) sont évasés de telle sorte que les deux extrémités du ruban (22, 24) de la bague sont déplacées en direction de l'évasement du ruban dans une mesure telle que la liaison, respectivement le verrouillage fixe entre les deux extrémités du ruban s'accrochant l'une dans l'autre, respectivement l'une contre l'autre se constitue, à la suite de quoi la bague, respectivement le collier sont immobilisés sur l'extrémité en forme de col dans la direction de rétrécissement du diamètre par un procédé de compression ou de contraction pour produire la liaison rigide entre le soufflet et l'arbre et/ou l'extrémité de l'arbre.

9. Procédé selon la revendication 8, **caractérisé en ce que** la bague de serrage, de compression ou de contraction, respectivement le collier de serrage est précontraint en direction du centre, **en ce que** les deux extrémités en l'état détaché précédant le montage se chevauchent l'une l'autre.

10. Arbre articulé, respectivement demi-arbre, en particulier pour l'utilisation sur des véhicules motorisés, avec au moins un dispositif selon l'une les revendications 1 à 7.
